# EUROPEAN PATENT APPLICATION

(11) **EP 4 826 497 A1**
(43) Date of publication of application: **21.10.2026**
(21) Application number: 24909565.4
(22) Date of filing: 06.06.2024
(51) Int. Cl.: G06F 3/023, G06F 3/04886

(54) **INPUT METHOD AND APPARATUS, ELECTRONIC DEVICE, AND STORAGE MEDIUM**

(30) Priority: 25.12.2023 CN 202311805222
(71) Applicant: ZTE CORPORATION, Shenzhen, Guangdong 518057 (CN)
(72) Inventor: CHEN, Jianjiang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/097667
(87) International publication number: WO 2025/138603

(57) **Abstract**

The present application discloses an input method and apparatus, an electronic device, and a storage medium. The input method comprises: in response to a first input to a second electronic device, calling a soft keyboard; using the second electronic device to acquire action data of a target object; and on the basis of the action data, driving corresponding keys on the soft keyboard to perform character input.

## Description

### CROSS-REFERENCE TO RELATED APPLICATIONS

This application claims priority to Chinese Application No. 202311805222.6, filed to CNIPA on December 25, 2023, entitled "INPUT METHOD AND APPARATUS, ELECTRONIC DEVICE, AND STORAGE MEDIUM", the entirety of which is incorporated herein by reference.

### TECHNICAL FIELD

The embodiments of the present application relate to technical field of terminals, and in particular to an input method and apparatus, an electronic device and a storage medium.

### BACKGROUND

With the continuous development of science and technology, terminal electronic products are increasingly popular, and intelligent terminal devices such as smart TV have entered people's daily life. However, due to different use scenarios, some scenarios require keyboards for character input, while others don't. Therefore, these intelligent terminals do not have a hardware keyboard for input like computers, and at the same time, they inevitably input characters. Therefore, the problem of character input in intelligent terminal devices is increasingly serious.

In some scenarios, a projection keyboard is often used to input characters to intelligent devices, but the projection keyboard has the problems of large size and inconvenient to carry. This kind of keyboard generally projects a virtual keyboard on a contact plane, and a key on the virtual keyboard is determined to be pressed when a finger clicks on the key. However, this type of projection keyboard can only determine whether a key is pressed by accurately detecting the position where the user's finger touches the projected key. But when the projection keyboard is located on a non-contact plane such as the back of the user's hand, the key pressed by the finger cannot be accurately detected, and when the light of the virtual keyboard projected by the projection keyboard is nearly parallel to the projected contact plane, the projected virtual keyboard may not be imaged, deformation may be caused, and input by the key may by influenced. Further, character input by the projected virtual keyboard is limited to certain extent, and user experience may be affected.

### SUMMARY

The embodiments of the present application provide an input method, apparatus, and a terminal, which can solve the problem that character input using a projected virtual keyboard has large limitations.

In a first aspect, provided is an input method, including: calling a soft keyboard in response to a first input to a second electronic device; acquiring action data of a target object using the second electronic device; and driving a corresponding key on the soft keyboard to perform character input according to the action data.

In a second aspect, provided is an input apparatus including: a first electronic device and a second electronic device, the first electronic device is connected to the second electronic device; the second electronic device is configured to acquire action data of a target object; and the first electronic device is configured to call a soft keyboard in response to a first input to the second electronic device, and to drive a corresponding key on the soft keyboard to perform character input according to the action data acquired by the second electronic device.

In a third aspect, provided is an input apparatus including: a calling unit, which is configured to call the soft keyboard of the first electronic device in response to a first input to the second electronic device; an acquisition unit, which is configured to acquire action data of a target object using the second electronic device; and an input unit, which is configured to drive corresponding keys on the soft keyboard to perform character input according to the action data.

In a fourth aspect, provided is an electronic device, including a processor and a memory storing a program or instructions executable on the processor, and the program or instructions, when executed by the processor, implement the steps of the method of the first aspect.

In a fifth aspect, provided is a readable storage medium, storing a program or instructions, which when executed by a processor, implement the steps of the method of the first aspect.

In a sixth aspect, provided is a chip comprising a processor and a communication interface, which is coupled to the processor, the processor being configured to execute a program or instructions to implement the method of the first aspect.

In a seventh aspect, provided is a computer program/program product stored in a storage medium, the computer program/program product being executed by at least one processor to implement the steps of the input method of the first aspect.

### BRIEF DESCRIPTION OF DRAWINGS

FIG. 1 shows a schematic structural diagram of an input apparatus provided by embodiments of the present application.
FIG. 2 shows a schematic diagram of an application scenario provided by embodiments of the present application.
FIG. 3 shows a schematic diagram of a soft keyboard provided by embodiments of the present application.
FIG. 4 shows a schematic diagram illustrating a scene of a first position of a soft keyboard provided by embodiments of the present application.
FIG. 5 shows a schematic coordinate diagram of a coordinate origin provided by embodiments of the present application.
FIG. 6 shows a schematic diagram illustrating a scene of a second position of a soft keyboard provided by embodiments of the present application.
FIG. 7 shows a schematic coordinate diagram of a start position and an end position provided by embodiments of the present application.
FIG. 8 shows a schematic flowchart of an input method provided by embodiments of the present application.
FIG. 9 shows a schematic structural diagram of another input apparatus provided by embodiments of the present application.
FIG. 10 shows a schematic structural diagram of an electronic device provided by embodiments of the present application.

### DETAILED DESCRIPTION

The technical solutions in the embodiments of the present application will be clearly described below with reference to the drawings in the embodiments of the present application. Obviously, the described embodiments are a part of the embodiments of the present application, not all of them. Based on the embodiments in this application, all other embodiments obtained by those skilled in the art fall within the protection scope of this application.

The terms "first", "second" and the like in description and claims of the present application are used to distinguish similar objects and are not used to describe a particular order or sequence. It should be understood that the terms thus used are interchangeable under appropriate circumstances so that the embodiments of the present application can be implemented in an order other than those illustrated or described herein, and that the objects distinguished by "first" and "second" are generally of one class, and the number of objects is not limited, for example, the first object can be one or a plurality of objects. Further, in description and claims, "and/or" indicates at least one of the connected objects, and the character "/" generally indicates that the associated objects before and after are in an "or" relationship.

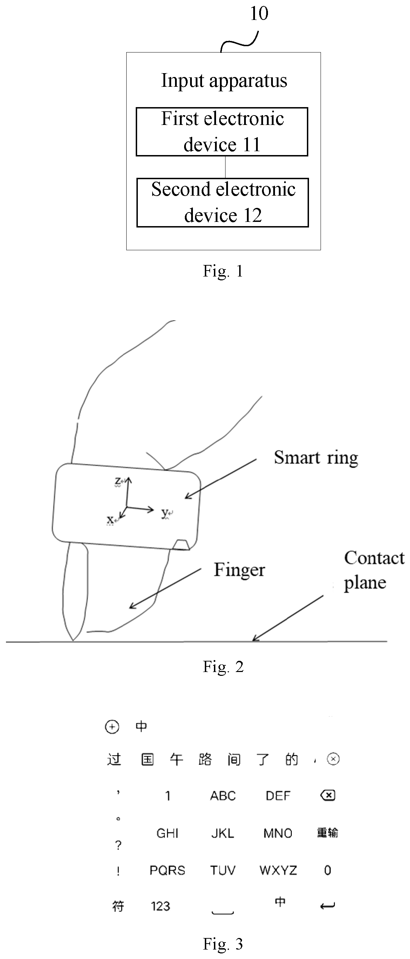

FIG. 1 shows a schematic structural diagram of an input apparatus applicable to the embodiments of the present application. The input apparatus 10 includes a first electronic device 11 and a second electronic device 12, and the first electronic device 11 and the second electronic device 12 are connected either in a wireless or wired manner. The first electronic device 11 can be a terminal-side device, such as a mobile phone, a Tablet Personal Computer, a Laptop Computer or a notebook computer, a Personal Digital Assistant (PDA), a handheld computer, a netbook, an ultra-mobile personal computer (UMPC), a Mobile Internet Device (MID), an augmented reality (AR)/virtual reality (VR) device, a robot, a Wearable Device, a vehicle-mounted device (VUE), a pedestrian terminal (PUE), a game console, a personal computer (PC), a teller machine or a self-service machine, and the wearable device includes a smart watch, a smart bracelet, a smart headphone, smart glasses, a smart wristband, smart clothing, etc. Note that the embodiments of the present application do not limit the type of the first electronic device 11, which can be any type of terminal having a display screen and a soft keyboard in its own system. The second electronic device 12 can be a wearable device such as a smart ring, a smart watch, a smart bracelet, a smart wristband, and the like.

For the first electronic device 11 and the second electronic device 12, the second electronic device 12 is configured to acquire action data of a target object, and the first electronic device 11 is configured to call a soft keyboard in response to a first input to the second electronic device 12, and drive a corresponding key on the soft keyboard to perform character input according to the action data acquired by the second electronic device 12. As an alternative embodiment, the calling of the soft keyboard may also be initiated by the first electronic device 11, the operation of the soft keyboard is subsequently implemented in response to information of the second electronic device.

The target object can be a movable object such as the finger, the wrist, an electronic pen, or the like, and the action data of the target object includes, but is not limited to, a predetermined action of the target object, movement data of the target object, and the like. The predetermined action includes, but is not limited to, clicking, rotating, sliding up, and the like, and the movement data includes, but is not limited to, the moving direction, the moving distance, and the like. As shown in FIG. 2, taking the target object as a finger and the second electronic device 12 as a smart ring as an example, the smart ring can be worn on the user's finger, and when the finger moves on the contact plane, the smart ring can acquire action data made by the finger. After the first electronic device 11 is connected with the second electronic device 12, the user can make a first input to the second electronic device 12, where the first input can be to turn on a switch button on the second electronic device 12, and when the switch button on the second electronic device 12 is turned on, the input function of the second electronic device 12 is turned on, so that the soft keyboard on the first electronic device 11 is called; or when the virtual button on the soft keyboard of the second electronic device is clicked, the input function of the second electronic device 12 is turned on, and when the virtual button is clicked, the soft keyboard on the first electronic device 11 is called. The form of the soft keyboard can be as shown in FIG. 3. Further, after the user makes the first input to the second electronic device 12, the soft keyboard of the first electronic device is called and displayed on the first electronic device.

Further, after the soft keyboard on the first electronic device 11 is called, a corresponding key on the soft keyboard on the first electronic device 11 is determined to perform character input based on the action data of the target object acquired by the second electronic device. For example, when the user wears the smart ring on a finger and the finger clicks a certain position once on the contact plane (the contact plane can be a desktop, the back of the hand, the palm, a wall, or the like), the second electronic device detects that the finger clicks once, the second electronic device determines that the position at which the finger clicks once is a start position; and then, after the finger moves by a certain distance from the start position toward the right side on the contact plane, stops, and clicks twice at the stopping position on the contact plane, the second electronic device determines that the position at which the finger clicks twice is an end position. The second electronic device sends the start position, the end position, the moving direction and the moving distance to the first electronic device, the first electronic device uses the corresponding position, to which the start position is mapped, on the soft keyboard as the coordinate origin, a cursor of the soft keyboard is driven to move from the coordinate origin by the moving distance in the moving direction to reach the target position on the soft keyboard, and according to twice clicking by the user's finger, the first electronic device clicks the button at the target position to perform character input. It is worth noting that the type of the action data can also be determined according to the actual situation, which is not limited in embodiments of the present application.

The second electronic device 12 includes, but is not limited to, a power supply module, an image acquisition module, an acceleration sensor, a pickup, a vibration sensor, a distance sensor, a gyroscope, a magnetic sensor, a communication module, a memory, a processor, and the like. The image acquisition module can be a camera, which is used to acquire image data of a target object in the moving process, and the target object can be the finger, an electronic pen, the wrist, or the like. The acceleration sensor is used to acquire the acceleration data of the target object in the moving process, and the pickup is used to acquire sound data of the target object when it performs predetermined action, the vibration sensor is used to acquire the vibration data of the target object when it performs predetermined action. The gyroscope is used to acquire attitude data of a target object, and the like.

Through the technical solution provided by the embodiments of the present application, the soft keyboard is called in response to the first input to the second electronic device, and then the action data of the target object is obtained by the second electronic device, and finally the corresponding key on the soft keyboard is driven to perform character input according to the action data. In this way, the soft keyboard of the first electronic device is called by the second electronic device. Since the soft keyboard belongs to the first electronic device itself, there is no restriction on the use environment, and the corresponding key on the soft keyboard of the first electronic device can be driven to perform character input only by the action data of the target object acquired by the second electronic device. Compared with the strict requirements of the projected keyboard for the projection contact plane, there is less the limitation of calling the soft keyboard of the first electronic device to perform character input, and the user's experience is improved.

In one possible implementation, the second electronic device includes an acceleration sensor, a pickup, and a vibration sensor; The pickup and the vibration sensor are configured to acquire a first predetermined action and a second predetermined action of the target object, the first predetermined action indicates a start position of the target object action and the second predetermined action indicates an end position of the target object action. The acceleration sensor is configured to acquire acceleration data from the start position to the end position of the target object. The second electronic device is further configured to determine the moving direction and the moving distance of the target object according to the acceleration data, the start position and the end position, and the action data includes the first predetermined action, the second predetermined action, the moving direction and the moving distance.

The first predetermined action and the second predetermined action can be rotating, clicking on the contact plane for N times, or the like, where N is a natural number greater than or equal to 1. When the target object performs the first predetermined action, it indicates the start position of movement of the target object. For example, when the user's finger clicks the contact plane for three times, the finger strikes the contact plane, the sound at the moment of striking is detected by the pickup, and the vibration at the moment of striking is detected by the vibration sensor. The second electronic device locates the contact point at which the finger performs the action as the start position, and then, the target object, which is stationary, moves from the start position, and after movement, the second predetermined action is performed to indicate the end position of movement of the target object. For example, when the user's finger clicks the contact plane once, the finger strikes the contact plane, the sound at the moment of striking is detected by the pickup, and the vibration at the moment of striking is detected by the vibration sensor. The second electronic device positions the contact point at which the finger performs the action as the end position.

Further, the acceleration sensor can be used to measure the movement and direction of the target object, the acceleration data includes the duration in which the target object moves from the start position to the end position, the magnitude of the acceleration when the target object moves, and the direction of the acceleration, the second electronic device determines the moving direction of the target object according to the direction of the acceleration, and determines the moving distance of the target object according to the direction of the target acceleration, the magnitude of the acceleration, and the duration. In this way, the position and the moving direction of the target object detected by the acceleration sensor are only the relative position and the relative movement of the target object, and there is no absolute position or virtual keyboard for projection, which avoids the problem of errors caused by absolute positioning and improves the efficiency and accuracy of character input.

In one possible implementation, the second predetermined action may also involve sliding after the target object moves a first predetermined distance away from the contact plane. For example, a user lifts the finger and the finger slides 1-2cm away from the contact plane, the key corresponding to the end position on the soft keyboard performs sliding input by air sliding, and further, sliding input is exited after the target object leaves the contact plane by a second predetermined distance, such as sliding input is ended if the user lifts the finger by 2-3cm again.

In one possible implementation, the second electronic device includes an acceleration sensor, a pickup, a vibration sensor and an image acquisition module; The pickup and the vibration sensor are configured to acquire a first predetermined action and a second predetermined action of the target object, the first predetermined action indicates a start position of the target object action, the second predetermined action indicates an end position of the target object action. The image acquisition module is configured to acquire image data from the start position to the end position of the target object. The second electronic device is further configured to determine the moving direction and the moving distance of the target object according to the image data, the start position, and the end position, and the action data includes the first predetermined action, the second predetermined action, the moving direction and the moving distance.

The first predetermined action and the second predetermined action can be rotating, clicking on the contact plane for N times, or the like, where N is a natural number greater than or equal to 1. When the target object performs the first predetermined action, it indicates the start position of movement of the target object. For example, when the user's finger clicks the contact plane for three times, the finger strikes the contact plane, the sound at the moment of striking is detected by the pickup, and the vibration at the moment of striking is detected by the vibration sensor. The second electronic device locates the contact point at which the finger performs the action as the start position, and then, the target object, which is stationary, moves from the start position, and after the movement, the second predetermined action is performed to indicate the end position of movement of the target object. For example, when the user's finger clicks the contact plane once, the finger strikes the contact plane, the sound at the moment of striking is detected by the pickup, and the vibration at the moment of striking is detected by the vibration sensor. The second electronic device positions the contact point at which the finger performs the action as the end position.

In one possible implementation, the second predetermined action may also involve sliding after the target object moves a first predetermined distance away from the contact plane. For example, a user lifts the finger and the finger slides 1-2cm away from the contact plane, the key corresponding to the end position on the soft keyboard performs sliding input by air sliding, and further, sliding input is exited after the target object leaves the contact plane by a second predetermined distance, such as sliding input is ended if the user lifts the finger by 2-3cm again.

Further, the image acquisition module can be a camera, the camera acquires image data of the target object at the start position, acquires image data in the process that the target object moves from the start position to the end position in real time, and acquires image data of the target object at the end position; the image data includes texture, image brightness, pattern, and the like on the contact plane. The image data of the target object at the start position, the image data in the moving process, and the image data of the end position acquired by the camera are compared with the preset image of the whole contact plane, so that the moving direction and the moving distance of the target object are determined. In this way, the position and moving direction of the target object acquired by the image acquisition module are only the relative position and relative movement of the target object, and there is no absolute position or virtual keyboard for projection, which avoids the problem of errors caused by absolute positioning and improves the efficiency and accuracy of character input.

In one possible implementation, the first electronic device is further configured to determine that the start position is mapped to a first position on the soft keyboard; to move a cursor from the first position to a second position on the soft keyboard by the moving distance in the moving direction; and to perform character input on a key corresponding to the second position according to the second predetermined action.

The first electronic device uses the corresponding first position to which the start position of the target object is mapped as the coordinate origin, a cursor of the soft keyboard is driven to move from the coordinate origin by the moving distance in the moving direction to reach the second position on the soft keyboard, and the first electronic device enables the key corresponding to the second position to perform character input according to the second predetermined action executed by the target object.

For example, when the user wears a smart ring on the finger, the finger clicks a certain position once on the contact plane (the contact plane can be a desktop, the back of the hand, the palm, a wall, or the like), and the second electronic device detects that the finger clicks once, then the second electronic device determines that the position at which the finger clicks once is a start position; and then, after the finger moves by a certain distance from the start position toward the right side on the contact plane, stops, and clicks twice at the stop position on the contact plane, the second electronic device determines that the position at which the finger clicks twice is an end position. The second electronic device sends the start position, end position, moving direction, and moving distance to the first electronic device.

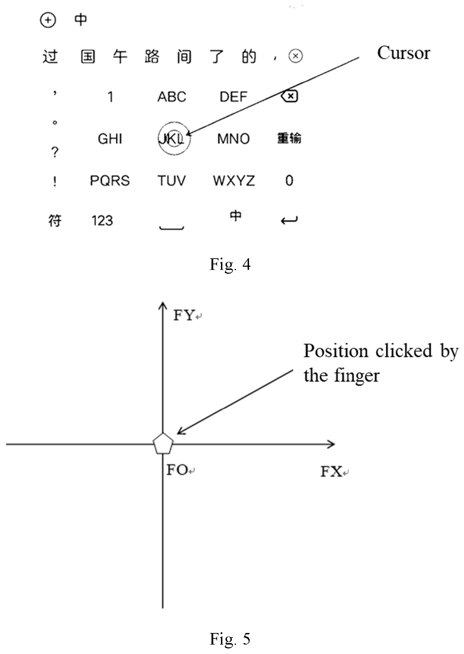

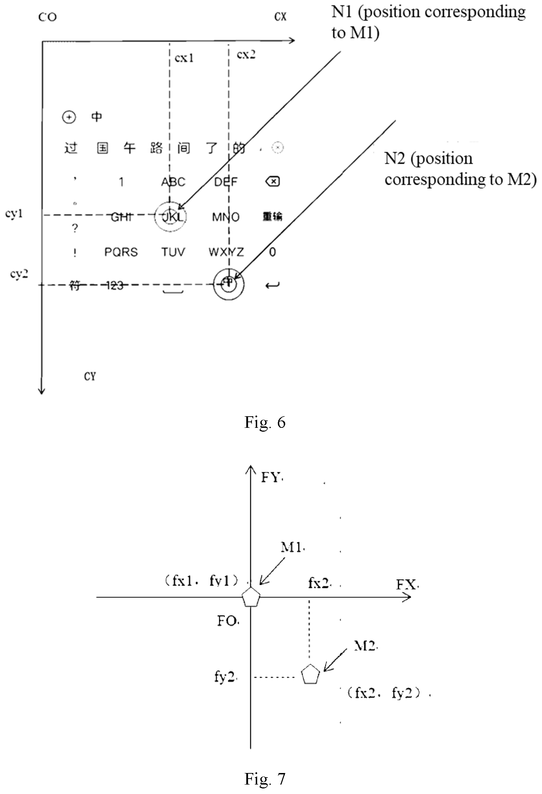

The first electronic device uses the corresponding first position to which the start position of the target object is mapped as the coordinate origin, as shown in FIG. 4, the position where the cursor is at the key 5 is the position corresponding to the coordinate origin, and the coordinate origin is at FO shown in FIG. 5. Starting from the position of the key 5, the cursor of the soft keyboard is driven to move by the moving distance in the moving direction to reach the second position on the soft keyboard, for example, the second position is the position where the key WXYZ shown in FIG. 6 is located, and according to twice clicking by the user's finger, the first electronic device clicks the key corresponding to the second position to perform character input. For example, as shown in FIG. 7, the smart ring detects the start position of the finger as the position M1 (fx1, fy1), and the end position of the finger as the position M2 (fx2, fy2), and the displacement between the start position and the end position is as follows. $dx = fx 2 - fx 1$ $dy = fy 2 - fy 1$

Where dx is the moving displacement in the FX direction, and dy is the moving displacement in the FY direction.

As shown in FIG. 6, the first position is N1, which corresponds to the start position M1, and the second position is N2, which corresponds to the end position M2, and the user defines the start position M1 of the finger by performing the first predetermined action. The user's finger slides towards the lower right by 1.414cm, that is, slides 1 cm to the right and 1 cm downward before stopping, and the end position is M2. The smart ring detects the moving direction and distance of the finger and transmits the direction and distance to the first electronic device, and the first electronic device drives the cursor to move from the first position N1 corresponding to the start position M1 to the second position N2 corresponding to the end position M2.

In one possible implementation, the first electronic device includes a display screen, and the first electronic device is further configured to determine a moving pixel corresponding to the moving distance according to the mapping relationship between a preset moving distance of the target object and a preset moving pixel of the display screen; and to move the cursor from the first position to the second position on the soft keyboard by the moving pixel in the moving direction.

Further, in order to accurately move the cursor on the soft keyboard, the mapping relationship between the moving distance of the target object and the pixels on the display screen of the second electronic device can be established, and the mapping relationship can be expressed by the following equation. $cx 2 = cx 1 + dx * σ 1$ $cy 2 = cy 1 - dy * σ 1$

Where σ1 is a proportional coefficient, which represents the ratio between the actual moving distance of the target object and the pixels of the display screen, that is, the actual moving distance of the target object is proportional to the pixels of the display screen. σ1 can be determined according to the actual situation, which is not limited in the embodiments of the present application. Here, the minus sign is used before dy * σ1 because the Y-axis coordinate direction of FIG. 6 is opposite to the Y-axis coordinate direction of FIG. 7.

For example, the user puts the smart ring on the right index finger, and starts the input function of the smart ring, the smart ring is connected with a terminal device, the terminal device displays a soft keyboard and defines the position of a cursor. The user makes a preset gesture to define the start position of the index finger, the user's right index finger slides 1.414cm toward the lower right, that is, slides 1 cm to the right and 1 cm downward before stopping, the smart ring detects the moving direction and moving distance of the finger. In this embodiment, the proportional coefficient σ1=1 is taken, and when σ1=1, moving 1cm is equivalent to moving 100 pixels on the display screen, that is, dx =100 and dy = -100.

The original position of the cursor on the display screen is cx1=500 pixels and cy1=600 pixels. After the user's finger slides 1cm to the right and 1cm downward, the cursor also moves certain pixels on the display screen, and the corresponding new position on the display screen is as follows. $cx 2 = cx 1 + dx * σ 1 = 500 + 100 * 1 = 600$ $cy 2 = cy 1 - dy * σ 1 = 600 - \left(-100\right) * 1 = 700$

It is worth noting that if the cursor on the screen moves by the pixels but cannot reach the corresponding key on the soft keyboard, the proportional coefficient can be increased, such as σ1=1.5, or σ1=2, etc., and vice versa.

In one possible implementation, after the second predetermined action is completed, the start position of the target object is updated to the position of the contact point where the user performs the second predetermined action on the contact plane, and the first position on the soft keyboard is also updated. For example, the position of the key WXYZ in FIG. 6 is updated to the first position (i.e., the coordinate origin), and the next finger movement detection is realized by using this as the coordinate origin. In this way, the detection error does not accumulate each time the target object moves, and the accuracy of input is improved.

In one possible implementation, when detecting a third predetermined action of the target object, the second electronic device turns off the input function of the second electronic device, that is, stops calling the soft keyboard of the first electronic device. The third predetermined action can be that the target object makes a gesture to end input (for example, on the contact plane, the user's finger clicks the contact plane three times consecutively, or rotates the finger, or touches a special position of the second electronic device (which can be a switch button of the second electronic device or a virtual button on the display screen of the second electronic device to turn off the input function)), and the first electronic device no longer drives the cursor to move on the soft keyboard.

Hereinafter, the input method provided by the embodiment of the present application will be described in detail with reference to some embodiments and application scenarios thereof in conjunction with drawings.

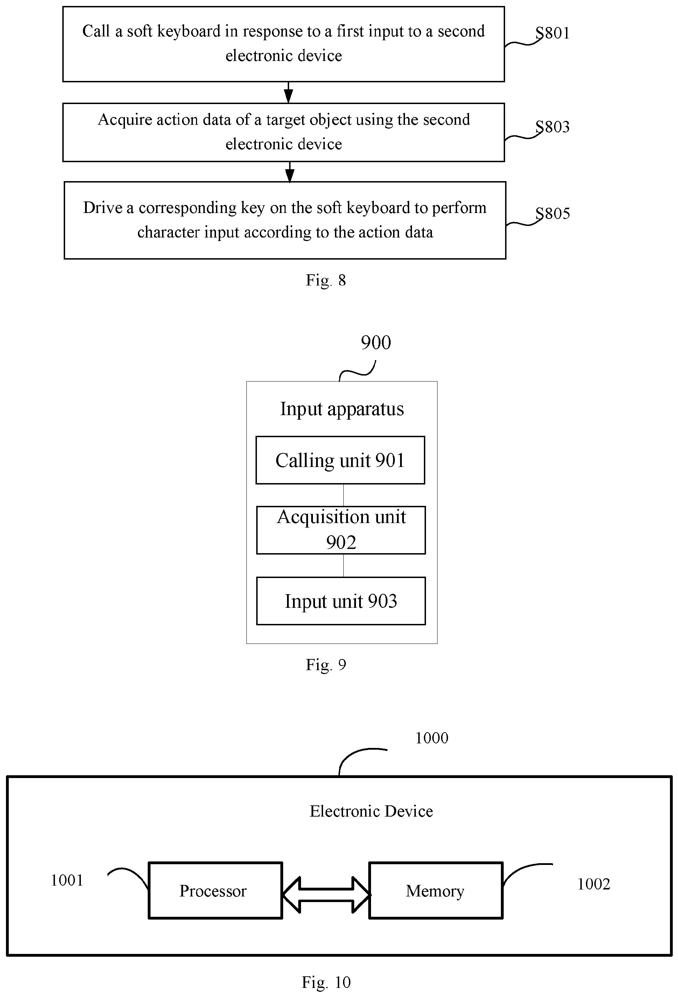

As shown in FIG. 8, one embodiment of the present application provides an input method that can be executed by a first electronic device, in other words, the method can be executed by software or hardware installed in the first electronic device, and the method includes the following steps.

At step S801: a soft keyboard is called in response to a first input to a second electronic device.

A user may make a first input to the second electronic device, wherein the first input can be to turn on a switch button on the second electronic device, and when the switch button on the second electronic device is turned on, the input function of the second electronic device is turned on, so that the soft keyboard on the first electronic device is called; or when the virtual button on the soft keyboard of the second electronic device is clicked, the input function of the second electronic device is turned on, and when the virtual button is clicked, the soft keyboard on the first electronic device is called. Further, after the user makes the first input to the second electronic device, the soft keyboard of the first electronic device is called and displayed on the first electronic device. The second electronic device can be a wearable device such as a smart ring, a smart watch, a smart bracelet, a smart wristband, and the like. Further, after the user makes the first input to the second electronic device, the soft keyboard of the first electronic device is called and the soft keyboard is displayed on the first electronic device.

At step S803: the action data of a target object is acquired using the second electronic device.

The target object can be a movable object such as the finger, the wrist, an electronic pen, or the like, and the action data of the target object includes, but is not limited to, a predetermined action of the target object, movement data of the target object, and the like. The predetermined action includes, but is not limited to, clicking, rotating, sliding up, and the like, and the movement data includes, but is not limited to, the moving direction, the moving distance, and the like. As shown in FIG. 2, taking the target object as the finger and the second electronic device as a smart ring as an example, the smart ring can be worn on the user's finger, and when the finger moves, the smart ring can acquire action data made by the finger.

In one possible implementation, a first predetermined action and a second predetermined action of the target object are acquired using the second electronic device, the first predetermined action indicates a start position of the target object action, and the second predetermined action indicates an end position of the target object action; the acceleration data from the start position to the end position of the target object are acquired by using the second electronic device; and the moving direction and moving distance of the target object are determined using the second electronic device, the moving direction and the moving distance are determined by the second electronic device from the acceleration data, the start position, and the end position, and the action data includes the first predetermined action, the second predetermined action, the moving direction and the moving distance.

The first predetermined action and the second predetermined action can be rotating, clicking on the contact plane N times, or the like, N is a natural number greater than or equal to 1. When the target object performs the first predetermined action, it indicates the start position of movement of the target object. For example, when the user's finger clicks the contact plane for three times, the finger strikes the contact plane. The second electronic device positions the contact point at which the finger performs the action as the start position, and then, the target object, which is stationary, moves from the start position,, and after movement, the second predetermined action is performed to indicate the end position of the movement of the target object. For example, when the user's finger clicks the contact plane once, the finger strikes the contact plane. The second electronic device positions the contact point at which the finger performs the action as the end position.

Further, the acceleration data includes the duration in which the target object moves from the start position to the end position, the magnitude of the acceleration when the target object moves, and the direction of the acceleration, the second electronic device determines the moving direction of the target object according to the direction of the acceleration, and determines the moving distance of the target object according to the direction of the target acceleration, the magnitude of the acceleration, and the duration. In this way, the position and the moving direction of the target object detected by the second electronic device are only the relative position and the relative movement of the target object, and there is no absolute position or virtual keyboard for projection, which avoids the problem of errors caused by absolute positioning and improves the efficiency and accuracy of character input.

In one possible implementation, acquiring action data of the target object using the second electronic device includes that: the first predetermined action and the second predetermined action of the target object are acquired using the second electronic device, the first predetermined action indicating the start position of the target object action and the second predetermined action indicating the end position of the target object action; the image data from the start position to the end position of the target object is acquired using the second electronic device; the moving direction and the moving distance of the target object are determined using the second electronic device, the moving direction and the moving distance are determined by the second electronic device from the image data, the start position, and the end position, and the action data includes the first predetermined action, the second predetermined action, the moving direction and the moving distance.

The first predetermined action and the second predetermined action can be rotating, clicking on the contact plane N times, or the like, where N is a natural number greater than or equal to 1. When the target object performs the first predetermined action, it indicates the start position of the target object's movement. For example, when the user's finger clicks the contact plane three times, the finger strikes the contact plane. The second electronic device locates the contact point at which the finger performs the action as the start position, and then, the target object, which is stationary, moves from the start position, and after the movement, the second predetermined action is performed to indicate the end position of movement of the target object. For example, when the user's finger clicks the contact plane once, the finger strikes the contact plane. The second electronic device positions the contact point at which the finger performs the action as the end position.

In one possible implementation, the second predetermined action may also involve sliding after the target object moves by a first predetermined distance away from the contact plane. For example, a user lifts a finger and slides 1-2cm away from the contact plane, sliding input is performed by the key corresponding to the end position on the soft keyboard by air sliding. Further, sliding input is exited after the target object leaves the contact plane by a second predetermined distance, such as sliding input is ended if the user lifts the finger by 2-3cm again.

Further, the image data includes image data of the target object at the start position, image data in the process that the target object moves from the start position to the end position, and image data of the target object at the end position. The image data includes texture, image brightness, pattern, and the like on the contact plane. The image data of the target object at the start position, the image data in the moving process, and the image data of the end position are compared with the preset image of the whole contact plane, so that the moving direction and the moving distance of the target object are determined. In this way, the position and moving direction of the target object are only the relative position and relative movement of the target object, and there is no absolute position or virtual keyboard for projection, which avoids the problem of errors caused by absolute positioning and improves the efficiency and accuracy of character input.

At step S805: the corresponding key on the soft keyboard is driven to perform character input according to the action data.

The start position of the target object is mapped to a corresponding position on the soft keyboard as the coordinate origin, a cursor of the soft keyboard cursor is driven to move from the coordinate origin by the moving distance in the moving direction to reach the end position on the soft keyboard, and the key corresponding to the second position is driven to perform character input according to the second predetermined action performed by the target object.

In one possible implementation, driving the corresponding key on the soft keyboard to perform character input according to the action data includes that: the start position is determined to be mapped to a first position on the soft keyboard; a cursor of the soft keyboard is moved from the first position to a second position by the moving distance in the moving direction; and the key corresponding to the second position is driven to perform character input according to the second predetermined action.

The start position of the target object is mapped to the corresponding first position on the soft keyboard as the coordinate origin, a cursor of the soft keyboard cursor is driven to move by the moving distance in the moving direction to reach the second position on the soft keyboard, and according to the second predetermined action by the target object, the key corresponding to the second position performs character input.

For example, when the user wears the smart ring on a finger, the finger performs click action once at a certain position on the contact plane (the contact plane can be a desktop, the back of the hand, the palm, a wall, or the like), and the second electronic device detects that the finger performs click action once, then the second electronic device determines that the position at which the finger performs one click action is a start position, and then after the finger moves by a certain distance from the start position toward the right side on the contact plane, stops, and performs clicking twice at the stop position on the contact plane, the second electronic device determines that the position at which the finger performs twice clicking is an end position. The second electronic device sends the start position, end position, moving direction, and moving distance to the first electronic device.

The first electronic device uses the corresponding first position to which the start position of the target object is mapped as the coordinate origin, as shown in FIG. 4, the position where the cursor is at the key 5 is the position corresponding to the coordinate origin, and the coordinate origin is at FO shown in FIG. 5. Starting from the coordinate origin, the cursor of the soft keyboard is driven to move by the moving distance in the moving direction to reach the second position on the soft keyboard, for example, the second position is the position where the key WXYZ shown in FIG. 6 is located, and according to twice clicking by the user's finger, the first electronic device clicks the key corresponding to the second position to perform character input. For example, as shown in FIG. 7, the smart ring detects the start position of the finger as the position M1 (fx1, fy1), and the end position of the finger as the position M2 (fx2, fy2), and the displacement between the start position and the end position is as follows. $dx = fx 2 - fx 1$ $dy = fy 2 - fy 1$

Where dx is the moving displacement in the FX direction, and dy is the moving displacement in the FY direction.

As shown in FIG. 6, the first position is N1, which corresponds to the start position M1, and the second position is N2, which corresponds to the end position M2, and the user defines the start position M1 of the finger by performing the first predetermined action. The user's finger slides towards the lower right by 1.414cm, that is, slides 1 cm to the right and 1 cm downward before stopping, and the end position is M2. The smart ring detects the moving direction and distance of the finger and transmits the direction and distance to the second electronic device, and the second electronic device drives the cursor to move from the first position N1 corresponding to the start position M1 to the second position N2 corresponding to the end position M2.

In one possible implementation, moving the cursor on the soft keyboard by the moving distance from the first position to the second position in the moving direction includes that: a moving pixel corresponding to the moving distance is determined according to the mapping relationship between a preset moving distance of the target object and a preset moving pixel of a display screen; and the cursor is moved on the soft keyboard from the first position to the second position in the moving direction.

In order to accurately move the cursor on the soft keyboard, the mapping relationship between the moving distance of the target object and the pixels on the display screen of the second electronic device can be established, and the mapping relationship can be expressed by the following equation. $cx 2 = cx 1 + dx * σ 1$ $cy 2 = cy 1 - dy * σ 1$

Where σ1 is a proportional coefficient, which represents the ratio between the actual moving distance of the target object and the pixels of the display screen, that is, the actual moving distance of the target object is proportional to the pixels of the display screen, and σ1 can be determined according to the actual situation, which is not limited in the embodiments of the present application. Here, the minus sign is used before dy * σ1 because the Y-axis coordinate direction of FIG. 6 is opposite to the Y-axis coordinate direction of FIG. 7.

For example, the user puts the smart ring on the right index finger, and starts the input function of the smart ring, the smart ring is connected with a terminal device, the terminal device displays the soft keyboard and defines the position of a cursor, the user makes a preset gesture to define the start position of the index finger, the user's right index finger slides 1.414cm toward the lower right, that is, slides 1 cm to the right and 1 cm downward before stopping, the smart ring detects the moving direction and moving distance of the finger. In this embodiment, the proportional coefficient σ1=1 is taken, and when σ1=1, moving 1cm is equivalent to moving 100 pixels on the display screen, that is, dx =100 and dy = -100.

The original position of the cursor on the display screen is cx1=500 pixels and cy1=600 pixels. After the user's finger slides 1cm to the right and 1cm downward, the cursor also moves certain pixels on the display screen, and the corresponding new position on the display screen is as follows. $cx 2 = cx 1 + dx * σ 1 = 500 + 100 * 1 = 600$ $cy 2 = cy 1 - dy * σ 1 = 600 - \left(-100\right) * 1 = 700$

It is worth noting that if the cursor on the screen moves by the pixels but cannot reach the corresponding key on the soft keyboard, the proportional coefficient can be increased, such as σ1=1.5, or σ1=2, etc., and vice versa.

Through the technical solution provided by the embodiments of the present application, the soft keyboard is called in response to the first input to the second electronic device, and then the action data of the target object is obtained by the second electronic device, and finally the corresponding key on the soft keyboard is driven to perform character input according to the action data. In this way, the soft keyboard of the first electronic device is called by the second electronic device. Since the soft keyboard belongs to the first electronic device itself, there is no restriction on the use environment, and the corresponding keys on the soft keyboard of the first electronic device can be driven to perform character input only by the action data of the target object acquired by the second electronic device. Compared with the strict requirements of the projected keyboard on the projection contact plane, there is less the limitation of calling the soft keyboard of the first electronic device to perform character input, and the user's experience is improved.

In one possible implementation, after the second predetermined action is completed, the start position of the target object is updated to the position of the contact point where the user performs the second predetermined action on the contact plane, and the first position on the soft keyboard is also updated. For example, the position of the key WXYZ in FIG. 6 is updated to the first position (i.e., the coordinate origin), and the next finger movement detection is realized by using this as the coordinate origin. In this way, the detection error does not accumulate each time the target object moves, and the accuracy of input is improved.

In one possible implementation, when detecting a third predetermined action of the target object, the second electronic device turns off the input function of the second electronic device, that is, stops calling the soft keyboard of the first electronic device. The third predetermined action can be that the target object makes a gesture to end input (for example, on the contact plane, the user's finger clicks the contact plane three times consecutively, or rotates the finger, or touches a special position of the second electronic device (which can be a switch button of the second electronic device or a virtual button on the display screen of the second electronic device to turn off the input function)), and the first electronic device no longer drives the cursor to move on the soft keyboard.

It should be noted that the execution body of the input method provided by the embodiments of the present application can be an input apparatus, and in the embodiments of the present application, the data processing apparatus provided by the embodiment of the present application is described by taking the input apparatus to execute and load input method as an example.

FIG. 9 shows a schematic structural diagram of the input apparatus provided by the embodiment of the present application. As shown in FIG. 9, the input apparatus 900 includes: a calling unit 901, which is configured to call the soft keyboard of the first electronic device in response to a first input to the second electronic device; an acquisition unit 902, which is configured to acquire action data of a target object using the second electronic device; and an input unit 903, which is configured to drive a corresponding key on the soft keyboard to perform character input according to the action data.

In the embodiments of the present application, the soft keyboard is called in response to the first input to the second electronic device, and then the action data of the target object is obtained using the second electronic device, and finally the corresponding key on the soft keyboard are driven to perform character input according to the action data. In this way, the soft keyboard of the first electronic device is called by the second electronic device. Since the soft keyboard belongs to the first electronic device itself, there is no restriction on the use environment, and the corresponding key on the soft keyboard of the first electronic device can be driven to perform character input only by the action data of the target object acquired by the second electronic device. Compared with the strict requirements of the projected keyboard on the projection contact plane, there is less the limitation of calling the soft keyboard of the first electronic device to perform character input, and the user's experience is improved.

In one possible implementation, the acquisition unit 902 is further configured to acquire a first predetermined action and a second predetermined action of the target object using the second electronic device, the first predetermined action indicates a start position of the target object action and the second predetermined action indicates an end position of the target object action; to acquire acceleration data of the target object from the start position to the end position using the second electronic device; to determine the moving direction and moving distance of the target object using the second electronic device, the moving direction and the moving distance are determined by the second electronic device according to the acceleration data, the start position, and the end position, and the action data includes the first predetermined action, the second predetermined action, the moving direction and the moving distance.

In one possible implementation, the acquisition unit 902 is further configured to acquire a first predetermined action and a second predetermined action of the target object using the second electronic device, the first predetermined action indicates a start position of the target object action and the second predetermined action indicates an end position of the target object action; to acquire image data of the target object moving from the start position to the end position using the second electronic device; to determine the moving direction and a moving distance of the target object by using the second electronic device, the moving direction and the moving distance are determined by the second electronic device according to the image data, the start position, and the end position, and the action data includes the first predetermined action, the second predetermined action, the moving direction and the moving distance.

In one possible implementation, the input unit 903 is further configured to determine that the start position is mapped to a first position on the soft keyboard; to move a cursor on the soft keyboard by the moving distance from the first position to a second position in the moving direction; and to drive a key corresponding to the second position to perform character input according to the second predetermined action.

In one possible implementation, the input unit 903 is further configured to determine a moving pixel corresponding to the moving distance according to the mapping relationship between a preset moving distance of the target object and a preset moving pixel of the display screen; and to move the cursor by the moving pixel on the soft keyboard from the first position to the second position in the moving direction.

The input apparatus provided by the embodiment of the present application can realize various processes realized by the method embodiment of FIG. 8, and achieve the same technical effect, and in order to avoid repetition, details will not be described here.

As shown in FIG. 10, the embodiment of the present application also provides an electronic device 1000, including a processor 1001 and a memory 1002, and the memory 1002 stores a program or instruction that can be executed on the processor 1001. When the program or instruction is executed by the processor 1001, various steps of the embodiment of the input method described above are realized, and the same technical effect can be achieved.

The embodiment of the present application also provides a readable storage medium, and a program or instruction is stored on the readable storage medium. When the program or instruction is executed by a processor, each process of the embodiment of the input method is realized, and the same technical effect can be achieved. In order to avoid repetition, details will not be described here.

The processor is a processor in the terminal in the above-described embodiment. The readable storage medium includes a computer-readable storage medium such as a computer read-only memory ROM, a random access memory RAM, a magnetic disk or an optical disk, and the like.

The embodiment of the present application also provides a chip, the chip comprises a processor and a communication interface, the communication interface and the processor are coupled, the processor is used for running a program or an instruction, realizing various processes of the embodiment of the input method, and can achieve the same technical effect, in order to avoid repetition, it will not be described again here.

It should be understood that the chips mentioned in embodiment of the present application can also be referred to as system-level chips, system chips, chip system or system-on-chip chip, etc.

The embodiment of the present application also provides a computer program/program product stored in a storage medium, and executed by at least one processor to realize various processes of the above-described input method embodiment, and to achieve the same technical effects, the computer program/program product will not be described again here in order to avoid repetition.

It should be noted that in this article, the terms "including", "comprising" or any other variation thereof are intended to encompass non-exclusive inclusion, such that a process, method, article, or apparatus that includes a series of elements not only includes those elements, but also includes other elements not explicitly listed, or also includes elements inherent to such process, method, article, or apparatus. Without further limitations, the element limited by the statement "including a..." does not exclude the existence of other identical elements in the process, method, article, or apparatus that includes that element. In addition, it should be pointed out that the scope of the methods and apparatus in the embodiments of the present application is not limited to performing functions in the order shown or discussed, and may also include performing functions in a substantially simultaneous manner or in the opposite order according to the functions involved. For example, the described methods may be performed in a different order than described, and various steps may be added, omitted, or combined. Additionally, the features described with reference to certain examples can be combined in other examples.

Through the description of the above implementation methods, those skilled in the art can clearly understand that the above implementation methods can be implemented through software and necessary general hardware platforms. Of course, they can also be implemented through hardware, but in many cases, the former is the better implementation method. Based on this understanding, the technical solution of the present application can essentially or contribute to the existing technology in the form of a computer software product, which is stored in a storage medium (such as ROM/RAM, magnetic disk, optical disk) and includes several instructions to enable a terminal (which can be a mobile phone, computer, server, air conditioner, or network device, etc.) to execute the methods of various embodiments of the present application.

The embodiments of the present application have been described above in conjunction with the accompanying drawings, but the present application is not limited to the above embodiments. The above embodiments are only illustrative and not restrictive. Under the inspiration of this application, those skilled in the art can also make many forms that fall within the scope of protection of this application without departing from the purpose and claims of this application.

## Claims

1. An input method, performed by a first electronic device, comprising:
calling, in response to a first input to a second electronic device, a soft keyboard;
acquiring action data of a target object using the second electronic device; and
driving, according to the action data, a corresponding key on the soft keyboard to perform character input.

2. The input method according to claim 1, wherein acquiring the action data of the target object using the second electronic device comprises:
acquiring a first predetermined action of the target object and a second predetermined action of the target object using the second electronic device, the first predetermined action indicating a start position of an action of the target object, and the second predetermined action indicating an end position of the action of the target object;
acquiring acceleration data from the start position to the end position of the target object using the second electronic device; and
determining a moving direction of the target object and a moving distance of the target object using the second electronic device, the moving direction and the moving distance being determined by the second electronic device according to the acceleration data, the start position, and the end position, and the action data comprising the first predetermined action, the second predetermined action, the moving direction and the moving distance.

3. The input method according to claim 1, wherein acquiring the action data of the target object using the second electronic device comprises:
acquiring a first predetermined action of the target object and a second predetermined action of the target object using the second electronic device, the first predetermined action indicating a start position of an action of the target object, and the second predetermined action indicating an end position of an action of the target object;
acquiring image data from the start position to the end position of the target object using the second electronic device; and
determining a moving direction of the target object and a moving distance of the target object using the second electronic device, the moving direction and the moving distance being determined by the second electronic device according to the image data, the start position, and the end position, and the action data comprising the first predetermined action, the second predetermined action, the moving direction and the moving distance.

4. The input method according to claim 2 or 3, wherein driving, according to the action data, the corresponding key on the soft keyboard to perform character input comprises:
determining that the start position is mapped to a first position on the soft keyboard;
moving from the first position to a second position on the soft keyboard by the moving distance in the moving direction; and
driving, according to the second predetermined action, a key corresponding to the second position to perform character input.

5. The input method according to claim 4, wherein moving from the first position to the second position on the soft keyboard by the moving distance in the moving direction comprises:
determining, according to a mapping relationship between a preset moving distance of the target object and a preset moving pixel of a display screen, a moving pixel corresponding to the moving distance; and
moving from the first position to the second position on the soft keyboard by the moving pixel in the moving direction.

6. An input apparatus, comprising a first electronic device and a second electronic device, the first electronic device being connected to the second electronic device;
the second electronic device is configured to acquire action data of a target object;
the first electronic device is configured to call a soft keyboard in response to a first input to the second electronic device, and drive a corresponding key on the soft keyboard to perform character input according to the action data acquired by the second electronic device.

7. The input apparatus according to claim 6, wherein the second electronic device comprises an acceleration sensor, a pickup, and a vibration sensor;
the pickup and the vibration sensor are configured to acquire a first predetermined action of the target object and a second predetermined action of the target object, the first predetermined action indicating a start position of an action of the target object and the second predetermined action indicating an end position of an action of the target object;
the acceleration sensor is configured to acquire acceleration data from the start position to the end position of the target object;
the second electronic device is further configured to determine a moving direction of the target object and a moving distance of the target object according to the acceleration data, the start position, and the end position, and the action data comprises the first predetermined action, the second predetermined action, the moving direction and the moving distance.

8. The input apparatus according to claim 6, wherein the second electronic device comprises an acceleration sensor, a pickup, a vibration sensor and an image acquisition module;
the pickup and the vibration sensor are configured to acquire a first predetermined action of the target object and a second predetermined action of the target object, the first predetermined action indicating a start position of an action of the target object and the second predetermined action indicating an end position of an action of the target object;
the image acquisition module is configured to acquire image data from the start position to the end position of the target object;
the second electronic device is further configured to determine a moving direction of the target object and a moving distance of the target object according to the image data, the start position, and the end position, and the action data comprises the first predetermined action, the second predetermined action, the moving direction and the moving distance.

9. The input apparatus according to claim 7 or claim 8, wherein the first electronic device is further configured to determine that the start position is mapped to a first position on the soft keyboard;
move from the first position to a second position on the soft keyboard by the moving distance in the moving direction; and
drive a key corresponding to the second position to perform character input according to the second predetermined action.

10. The input apparatus according to claim 9, wherein the first electronic device comprises a display screen, the first electronic device is further configured to determine a moving pixel corresponding to the moving distance according to a mapping relationship between a preset moving distance of the target object and a preset moving pixel of the display screen; and
move the cursor from the first position to the second position on the soft keyboard by the moving distance in the moving direction.

11. An input apparatus, the input apparatus comprising:
a calling unit, which is configured to call a soft keyboard of a first electronic device in response to a first input to a second electronic device;
an acquisition unit, which is configured to acquire action data of a target object using the second electronic device; and
an input unit, which is configured to drive a corresponding key on the soft keyboard to perform character input according to the action data.

12. An electronic device, comprising a processor and a memory storing a program or instructions executable on the processor, and the program or instructions, when executed by the processor, implement the steps of the input method according to any one of claims 1 to 5.

13. A readable storage medium, storing a program or instructions, which when executed by a processor, implement the steps of the input method according to any one of claims 1 to 5.
